(19) **Europäisches Patentamt / European Patent Office / Office européen des brevets**

(11) **EP 3 393 958 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16812978.1**

(22) Anmeldetag: **21.12.2016**

(51) Int Cl.:
**B66B 19/00** *(2006.01)* **B66B 11/00** *(2006.01)*

(86) Internationale Anmeldenummer:
**PCT/EP2016/082234**

(87) Internationale Veröffentlichungsnummer:
**WO 2017/108988 (29.06.2017 Gazette 2017/26)**

(54) **AUFZUGSYSTEM MIT RESERVOIR FÜR TRAKTIONSMEDIUM**

ELEVATOR SYSTEM WITH RESERVOIR FOR TRACTION MEDIUM

SYSTÈME D'ASCENSEUR COMPRENANT UN RÉSERVOIR POUR MOYEN DE TRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2015 EP 15202059**

(43) Veröffentlichungstag der Anmeldung:
**31.10.2018 Patentblatt 2018/44**

(73) Patentinhaber: **Inventio AG**
**6052 Hergiswil (CH)**

(72) Erfinder:
- **CHRISTEN, Lukas**
  **CH- 8802 Kilchberg/ZH (CH)**
- **WEBER, Stefan**
  **5524 Niederwil (CH)**

(56) Entgegenhaltungen:
**EP-A1- 2 650 248     WO-A1-2014/086639**
**JP-A- H06 263 369**

## Beschreibung

Die vorliegende Erfindung betrifft ein Aufzugsystem, ein Verfahren zum Einstellen einer Länge eines Abschnitts eines Traktionsmediums in einem Reservoir und eine Verwendung eines Reservoirs zum Vorhalten eines Abschnitts des Traktionsmediums.

Bevor ein Aufzugsystem in seiner normalen Betriebsweise betrieben werden kann, kann es bereits während einer Bauphase in einem Gebäude installiert werden. Es ist dann möglich, dass das Aufzugsystem während der Bauphase bereits zum vertikalen Transport von Personen und/oder Material verwendet wird, und dass es während des Baus des Gebäudes mitwächst. Auf diese Weise kann auf gesonderte externe Aufzüge (die beispielsweise an der Außenseite des Gebäudes angebracht sein können) verzichtet werden.

Dazu kann beispielsweise ein Teil der Führungsschienen und eine Aufzugkabine in dem für das Aufzugsystem vorgesehenen Aufzugschacht montiert werden, wenn ein oder mehrere untere Stockwerke des Gebäudes gebaut wurden. Die Aufzugkabine und weitere Komponenten des Aufzugsystems können dabei an eine Hebeplattform gehängt sein, die beispielsweise mit einem Kran oder anderen Mitteln auf eine nächsthöhere Ebene angehoben werden kann, um den Transportweg des Aufzugsystems zu verlängern.

Beispielsweise können bei einem sogenannten "Climb lift"-System bzw. Kletterliftsystem die Führungsschienen des Aufzugsystems sukzessive während der Bauphase im Aufzugschacht angebracht werden und die Hebeplattform bei Bedarf an den Führungsschienen nach oben befördert werden. Die Hebeplattform kann dann an der gewünschten höheren Position mit Streben fixiert werden, die aus der Hebeplattform heraus in Öffnungen in den Wänden des Aufzugsschachts geschoben werden können.

Die WO 2014/086639 A1 zeigt beispielsweise ein Aufzugsystem, das temporär beim Bau eines Gebäudes verwendet werden kann, und bei dem ein benutzbarer Abschnitt eines Traktionsseils des Aufzugs durch Öffnen einer Seilklemme verlängert werden kann. Das Öffnen und Schließen einer Seilklemme an verschiedenen Stellen des Traktionsseils kann die Lebensdauer des Traktionsseils verkürzen.

Das Dokument JP H06 263369 A beschreibt einen Aufzug, bei dem die Länge der Tragmittel durch Veränderung des Abstandes zwischen auf dem Schachtboden angeordneten Rollen, über die die Tragmittel geführt sind, verändert werden kann.

Es kann unter anderem ein Bedarf daran bestehen, das gleiche Traktionsmedium während der gesamten Bauphase des Gebäudes zu verwenden, ein Traktionsmedium bei verschiedenen Aufzügen mehrmals zu verwenden, und/oder ein Traktionsmedium, das während der Bauphase verwendet wurde, auch während der Betriebsphase weiter zu verwenden.

Ein solcher Bedarf kann durch den Gegenstand der unabhängigen Ansprüche entsprochen werden. Vorteilhafte Ausführungsformen sind in den abhängigen Ansprüchen definiert.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Ein Aspekt der Erfindung betrifft ein Aufzugsystem. Ein Aufzugsystem kann eine Aufzugkabine umfassen, die dazu ausgeführt ist, Personen und/oder Material in einer vertikalen Richtung zu transportieren. Die Aufzugkabine kann an Führungsschienen, die in einem Aufzugschacht seitlich an Wänden des Aufzugschachts angebracht sind, vertikal geführt werden. Das Aufzugsystem kann ein sogenanntes "climb lift"-System bzw. Kletterliftsystem (siehe oben) sein.

Gemäß einer Ausführungsform der Erfindung umfasst das Aufzugsystem eine Aufzugkabine, die in einem Aufzugschacht vertikal beweglich angeordnet ist; ein Traktionsmedium zum Heben und Senken der Aufzugkabine, wobei das Traktionsmedium um wenigstens eine an der Aufzugkabine fixierten Rolle geführt ist und das Traktionsmedium lediglich an Enden fixiert ist; ein Reservoir für das Traktionsmedium, wobei das Reservoir wenigstens eine erste Umlenkachse und wenigstens eine zweite Umlenkachse umfasst, um die das Traktionsmedium abwechselnd zwischen einer ersten Umlenkachse und einer zweiten Umlenkachse geführt ist, so dass ein Abschnitt des Traktionsmediums, dessen Länge von einem Abstand der wenigstens einen ersten Umlenkachse und der wenigstens einen zweiten Umlenkachse abhängt, in dem Reservoir aufgenommen ist; und eine Fixiereinheit, an der die wenigstens eine zweite Umlenkachse fixiert ist, wobei die Fixiereinheit an verschiedenen Positionen im Aufzugschacht befestigbar ist, so dass ein Abstand zwischen der wenigstens einen ersten Umlenkachse und der wenigstens einen zweiten Umlenkachse einstellbar ist, um die in dem Reservoir aufgenommene Länge des Traktionsmediums festzulegen.

Ein Traktionsmedium kann dabei ein länglicher flexibler Körper sein, der dazu geeignet ist, eine Kraft entlang seiner Längsrichtung zu übertragen. Weiter kann ein Traktionsmedium über Rollen und/oder über Umlenkachsen umgelenkt werden, d.h., es kann sich flexibel um Rollen und/oder Umlenkachse legen.

Eine Rolle kann um eine Drehachse beweglich sein, so dass das Traktionsmedium nicht auf einer (zylinderförmigen und/oder runden) Lauffläche der Rolle schleifen muss. Im Allgemeineren kann eine Umlenkachse eine Rolle umfassen, auf der das Traktionsmedium umgelenkt wird. Alternativ kann eine Umlenkachse als starre Umlenkachse ausgeführt sein, so dass das Traktionsmedium auf einer (zylinderförmigen und/oder runden) Lauffläche der Umlenkachse schleift.

Zusammengefasst umfasst das Aufzugsystem ein Reservoir für ein Traktionsmedium, das verlängert bzw. verkürzt werden kann, um den Abschnitt des Traktionsmediums, der für die Aufzugkabine zur Verfügung steht, bei Bedarf zu verkürzen bzw. zu verlängern. Beispielsweise kann immer nach dem Verlängern der Fahrhöhe des Aufzugsystems der Abschnitt des Traktionsmediums verkürzt werden, so dass der Fahrzugkabine mehr Traktionsmedium zur Verfügung steht.

Das Reservoir umfasst eine oder mehrere erste Umlenkachsen, die beispielsweise an einem oberen Ende des Aufzugsystems angebracht sein können, und eine oder mehrere zweite Umlenkachsen, die weiter unten im Aufzugschacht an einer Fixiereinheit fixiert sein können. Diese Fixiereinheit kann höhenverstellbar sein, um den Abstand zwischen der ersten Umlenkachse und der zweiten Umlenkachse einstellen zu können.

Auf diese Weise wird es möglich, dass das für die Aufzugkabine zur Verfügung stehende Traktionsmedium verlängert und verkürzt werden kann, ohne dass es zwischen seinen Enden eingeklemmt werden muss. Es ist lediglich an seinen Enden fixiert und dazwischen über Rollen und/oder Umlenkachsen geführt. Dadurch werden die Lebensdauer und/oder die Wiederverwertbarkeit eines Traktionsmediums nicht negativ beeinträchtigt.

Der Begriff "fixiert" kann dabei so verstanden werden, dass das Traktionsmedium bezüglich der Komponente, an die es fixiert ist, nicht beweglich ist. Beispielsweise kann das Traktionsmedium zwar eine Rolle berühren, ist aber nicht an dieser fixiert.

Eine Aufzugkabine kann seitlich geöffnet sein. Andererseits kann eine Aufzugkabine auch seitlich und/oder von oben durch Wände begrenzt sein.

Die Fixiereinheit kann eine Baukomponente sein, an der eine oder mehrere zweite Umlenkachsen befestigt sind und mit der die eine oder mehreren Umlenkachsen gemeinsam bewegt werden können. Weiter stellt die Fixiereinheit eine Befestigungsmöglichkeit mit einem Einstellseil oder mit dem Aufzugschacht zur Verfügung.

Die Fixiereinheit ist über wenigstens ein Einstellseil mit einem Fixierpunkt verbunden. Das Einstellseil kann ein Stahlseil sein. Der Fixierpunkt kann sich beispielsweise an einem unteren Ende des Aufzugschachts befinden.

Zum Verlängern und/oder Verkürzen des Abstands der wenigstens einen ersten Umlenkachse und der wenigstens einen zweiten Umlenkachse ist das Einstellseil zwischen der Fixiereinheit und dem Fixierpunkt verlängerbar und/oder verkürzbar. Beispielsweise kann das Einstellseil bei dem Fixierpunkt mit einer Klemme an dem Aufzugschacht fixiert sein. Durch Lösen der Klemme kann ein Abschnitt des Einstellseils zwischen der Fixiereinheit und dem Fixierpunkt verlängert werden. Beispielsweise kann die Aufzugkabine durch ihr Gewicht und/oder einen Antrieb des Aufzugsystems eine Kraft auf das Traktionsmedium ausüben, so dass dieses die Fixiereinheit in Richtung der wenigstens einen ersten Umlenkachse zieht.

Es ist auch möglich, dass die Fixiereinheit über zwei oder mehr Einstellseile mit zwei oder mehr Fixierpunkten verbunden ist, um beispielsweise die Redundanz zu erhöhen. Gemäß einer Ausführungsform der Erfindung ist bei dem Fixierpunkt eine Seiltrommel zum Aufnehmen eines Endabschnitts des Einstellseils vorgesehen. Mit dieser Seiltrommel kann ein unbenützter Abschnitt des Einstellseils verstaut werden.

Mit einem Einstellseil kann die Position der Fixiereinheit kontinuierlich eingestellt werden. Es ist möglich, die Fixiereinheit an beliebigen Positionen im Aufzugschacht an einer vertikalen Bewegung zu hindern.

Gemäß einer Ausführungsform der Erfindung ist die Fixiereinheit an mehreren Positionen an einer Wand des Aufzugschachts fixierbar. Zum Verlängern und/oder Verkürzen des Abstands der wenigstens einen ersten Umlenkachse und der wenigstens einen zweiten Umlenkachse kann die Fixiereinheit an einer dieser Positionen an der Wand fixiert werden. Beispielsweise kann die Fixiereinheit an der gewünschten Position mit der Wand verschraubt werden.

Gemäß einer Ausführungsform der Erfindung umfasst das Reservoir wenigstens zwei erste Umlenkachsen und/oder wenigstens zwei zweite Umlenkachsen. Beispielsweise kann das Reservoir zwei, drei, vier oder mehr erste Umlenkachsen aufweisen. Auch kann das Reservoir zwei, drei, vier oder mehr zweite Umlenkachsen aufweisen. Es ist weiter möglich, dass das Reservoir eine erste Umlenkachse mehr als zweite Umlenkachsen aufweist, wenn beispielsweise das Traktionsmedium mit einem Ende an der Fixiereinheit fixiert ist.

Da das Traktionsmedium zwischen den ersten Umlenkachsen und den zweiten Umlenkachsen (oder der zweiten Umlenkachse) im Reservoir hin und her verläuft, steigt die Länge des Traktionsmediums im Reservoir mit zunehmender Anzahl an Umlenkachsen an. Beispielsweise kann mit jeweils zwei ersten und zweiten Umlenkachsen das Vierfache des Abstands dieser Umlenkachsen im Reservoir vorgehalten werden. Unter der Annahme, dass der Abstand der ersten und der zweiten Umlenkachsen anfangs (am Beginn der Einbauphase) in etwa genauso lang ist wie die Transporthöhe, ist im Reservoir die vierfache Länge des Traktionsmediums dieser Transporthöhe vorgesehen. Durch Verkürzen des Abstands der ersten und zweiten Umlenkachsen auf etwa 0 kann die Transporthöhe damit auf das etwa Vierfache der ursprünglichen Transporthöhe vergrößert werden, ohne dass das Traktionsmedium ausgetauscht werden muss.

Gemäß einer Ausführungsform der Erfindung ist die wenigstens eine erste Umlenkachse eine Umlenkrolle und/oder ist die wenigstens zweite Umlenkachse eine Umlenkrolle. Das Traktionsmedium kann in dem Reservoir über Umlenkrollen geführt sein, d.h. über eine oder mehrere erste Umlenkrollen und/oder über eine oder mehrere zweite Umlenkrollen, die in der Fixiereinheit vorgesehen sind.

Es kann aber auch sein, dass zumindest ein Teil der Umlenkachsen nicht beweglich ist und das Traktionsmedium auf einer oder mehreren Umlenkachsen schleift. Dies kann von Vorteil sein, um Kräfte, die von der Aufzugkabine auf das Traktionsmedium wirken und in das Reservoir eingeleitet werden, durch diese Umlenkachse abgedämpft werden und/oder beispielsweise nur in verminderter Form auf die Fixiereinheit wirken.

Weiter kann es möglich sein, dass eine oder mehrere Umlenkrollen (automatisch) fixierbar bzw. sperrbar sind. Beispielsweise können eine oder mehrere erste Umlenkrollen jeweils eine Blockiervorrichtung aufweisen, mit der die entsprechende Umlenkrolle während des Bewegens der Fixiereinheit blockiert werden kann. Dies kann durch ein in Drehrichtung der Umlenkrolle unbewegliches Zahnrad geschehen, das zum Blockieren der Umlenkrolle in eine entsprechend dem Zahnrad geformte Öffnung in der Umlenkrolle geschoben wird.

Gemäß einer Ausführungsform der Erfindung umfasst das Reservoir eine Rollenanordnung zum Reduzieren einer auf das Traktionsmedium im Reservoir wirkenden Kraft, die zwischen dem Abschnitt des Traktionsmediums im Reservoir und einem mit der Aufzugkabine verbundenen Abschnitt des Traktionsmediums angeordnet ist. Die Rollenanordnung, die eine Mehrzahl von Umlenkrollen umfassen kann, kann somit am Eingang des Reservoirs angeordnet sein. Jede der Umlenkrollen der Rollenanordnung kann eine von der Aufzugkabine auf das Traktionsmedium ausgeübte Kraft reduzieren, so dass insgesamt eine wesentlich kleinere Kraft auf die Fixiereinheit wirkt.

Es ist auch möglich, dass die Rollenanordnung eine Mehrzahl von sperrbaren bzw. fixierbaren Umlenkrollen umfasst. Diese sperrbaren Umlenkrollen können während des normalen Aufzugbetriebs gesperrt werden (beispielsweise mit einer Blockiervorrichtung wie obenstehend beschrieben) und zum Verlängern des Traktionsmediums im Reservoir entsperrt werden.

Gemäß einer Ausführungsform der Erfindung bleibt bei einer Bewegung der Aufzugkabine in dem Aufzugschacht die Länge des (ersten) Abschnitts des Traktionsmediums, der in dem Reservoir aufgenommen ist, unverändert. Ein Antrieb des Aufzugsystems kann nur Abschnitte des Traktionsmediums bewegen, die nicht in dem Reservoir enthalten sind. Mit anderen Worten greift der Antrieb nicht innerhalb des Reservoirs auf das Traktionsmedium zu.

Gemäß einer Ausführungsform der Erfindung wird bei einer Bewegung der Aufzugkabine in dem Aufzugschacht ein zweiter Abschnitt des Traktionsmediums, der um eine an einem Gegengewicht für die Aufzugkabine fixierten Umlenkrolle geführt ist, verkürzt bzw. verlängert, und wird ein dritter Abschnitt des Traktionsmediums, der um die an der Aufzugkabine fixierten Umlenkrolle läuft, entsprechend verlängert bzw. verkürzt. Der zweite Abschnitt und der dritte Abschnitt können durch einen dazwischen auf sie zugreifenden Antrieb verkürzt bzw. verlängert werden.

Es ist zu verstehen, dass der erste Abschnitt des Traktionsmediums mit einem Ende fixiert ist und/oder in den dritten Abschnitt übergeht. Weiter kann der zweite Abschnitt mit einem Ende fixiert sein und/oder in den dritten Abschnitt übergehen.

Gemäß einer Ausführungsform der Erfindung umfasst das Aufzugsystem weiter eine Hebeplattform zum Befestigen in unterschiedlicher Höhe über einem Boden des Aufzugschachts, um eine vertikale Fahrhöhe der Aufzugkabine zu verlängern. Beispielsweise kann die Hebeplattform mit einem Kran um ein Stockwerk des Gebäudes angehoben werden, wenn dieses um ein Stockwerk höher gebaut wurde. Nach dem Anheben der Hebeplattform kann das Reservoir, d.h. der Abstand zwischen der wenigstens einen ersten Umlenkachse und der wenigstens einen zweiten Umlenkachse, derart verkürzt werden, dass für die Aufzugkabine (d.h. für den oben genannten zweiten und dritten Abschnitt) so viel Traktionsmedium zur Verfügung steht, dass sie auch über die gesamte verlängerte Fahrhöhe bewegt werden kann.

Gemäß einer Ausführungsform der Erfindung ist das Traktionsmedium mit beiden Enden an der Hebeplattform fixiert. Beispielsweise kann ein Ende des Traktionsmediums im Reservoir (d.h. des ersten Abschnitts) an der Hebeplattform befestigt sein. Auch kann ein Ende des Traktionsmediums des zweiten Abschnitts (mit dem das Gegengewicht bewegt wird) an der Hebeplattform angebracht sein.

Gemäß einer Ausführungsform der Erfindung ist die wenigstens eine erste Umlenkachse des Reservoirs an der Hebeplattform fixiert. Die eine oder mehreren Umlenkachsen können somit mit der Hebeplattform zusammen angehoben werden.

Gemäß einer Ausführungsform der Erfindung ist die Rollenanordnung zum Reduzieren einer auf das Traktionsmedium im Reservoir wirkenden Kraft an der Hebeplattform fixiert. Auch die Rollenanordnung kann mit der Hebeplattform zusammen angehoben werden.

Gemäß einer Ausführungsform der Erfindung ist ein Antrieb für das Aufzugsystem an der Hebeplattform fixiert. Auch der Antrieb kann zusammen mit der Hebeplattform angehoben werden.

Gemäß einer Ausführungsform der Erfindung ist das Traktionsmedium ein Stahlseil bzw. umfasst ein Stahlseil. Ein Stahlsein kann dabei einen im Wesentlichen runden Querschnitt und/oder mehrere miteinander verflochtene Stahldrähte aufweisen.

Gemäß einer Ausführungsform der Erfindung ist das Traktionsmedium ein Riemen oder umfasst einen Riemen, beispielsweise ein Riemen aus mit Kunststoff ummantelten Stahldrähten. Ein Riemen kann einen länglichen Querschnitt mit zwei längeren im Wesentlichen parallelen Seiten aufweisen.

Ein weiterer Aspekt der Erfindung betrifft ein Verfahren zum Einstellen einer Länge eines Abschnitts eines Traktionsmediums in einem Reservoir eines Aufzugsystems, beispielsweise eines Aufzugsystems, so wie es obenstehend und untenstehend beschrieben ist. Es ist zu verstehen, dass Merkmale des Aufzugsystems auch Merkmale des Verfahrens sein können und umgekehrt.

Gemäß einer Ausführungsform der Erfindung umfasst das Verfahren: Lösen einer Befestigung der Fixiereinheit, die sich an einer ersten Position im Aufzugschacht befindet, so dass die Fixiereinheit im Aufzugschacht beweglich ist; Bewegen der Fixiereinheit zu einer zweiten Position, so dass der Abstand der wenigstens einen ersten Umlenkachse und der wenigstens einen zweiten Umlenkachse und somit die Länge des Abschnitts des Traktionsmediums in dem Reservoir verkürzt bzw. verlängert wird, so dass ein verbleibender Abschnitt des Traktionsmediums, der zum Heben der Aufzugkabine zur Verfügung steht, entsprechend verlängert bzw. verkürzt wird; und Befestigen der Fixiereinheit bei der zweiten Position.

Mit anderen Worten kann zum Verlängern und/oder Verkürzen der Abschnitte (des zweiten und dritten Abschnitts wie oben beschrieben), die zum Bewegen der Aufzugkabine und/oder des Gegengewichts dienen, der Abschnitt des Traktionsmediums im Reservoir entsprechend verkürzt und verlängert werden. Dies geschieht durch Repositionieren des Fixierelements. Wird dieses auf die ersten Umlenkachsen zubewegt, gibt das Reservoir Traktionsmedium frei, während es bei Bewegen des Fixierelements von den ersten Umlenkachsen weg Traktionsmedium einzieht. Indem das Fixierelement nach dem Repositonieren wieder gegenüber dem Aufzugschacht fixiert wird, steht anschließend für die Abschnitte zum Bewegen der Aufzugkabine immer die gewünschte Länge zur Verfügung.

Es ist zu verstehen, dass das Verfahren während und/oder nach dem Anheben der Hebeplattform durchgeführt werden kann. Anschließend, wenn das Fixierelement wieder am Aufzugschacht fixiert ist, kann wieder der normale Aufzugbetrieb (d.h. Transport von Personen und/oder Gegenständen) aufgenommen werden.

Ein weiterer Aspekt der Erfindung betrifft ein Verwenden eines Reservoirs zum Vorhalten eines Abschnitts eines Traktionsmediums eines Aufzugsystems, beispielsweise eines Aufzugsystems, so wie es obenstehend und untenstehend beschrieben ist. Es ist zu verstehen, dass Merkmale der Verwendung auch Merkmale des Verfahrens und/oder des Aufzugsystems sein können und umgekehrt.

Gemäß einer Ausführungsform der Erfindung umfasst das Reservoir wenigstens eine erste Umlenkachse und wenigstens eine zweite Umlenkachse, um die das Traktionsmedium abwechselnd zwischen einer ersten Umlenkachse und einer zweiten Umlenkachse geführt ist, so dass der Abschnitt des Traktionsmediums, dessen Länge von einem Abstand der wenigstens einen ersten Umlenkachse und der wenigstens einen zweiten Umlenkachse abhängt, in dem Reservoir aufgenommen ist. Weiter kann die wenigstens eine zweite Umlenkachse an einer Fixiereinheit fixiert sein, wobei die Fixiereinheit an verschiedenen Positionen im Aufzugschacht befestigbar ist, so dass ein Abstand zwischen der wenigstens einen ersten Umlenkachse und der wenigstens einen zweiten Umlenkachse einstellbar ist, um die in dem Reservoir aufgenommene Länge des Traktionsmediums festzulegen.

Es wird daraufhingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen. Der Schutzumfang der Erfindung wird durch die beigefügten Ansprüche bestimmt.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt schematisch ein Aufzugsystem gemäß einer Ausführungsform der Erfindung.

Fig. 2 zeigt schematisch ein nicht erfindungsgemäßes Aufzugsystem.

Fig. 3 zeigt schematisch ein Aufzugsystem gemäß einer weiteren Ausführungsform der Erfindung.

Fig. 4 zeigt einen Ausschnitt aus der Fig. 3.

Die Figuren sind lediglich schematisch und nicht maßstabsgetreu. Gleiche Bezugzeichen bezeichnen in den verschiedenen Figuren gleiche oder gleichwirkende Merkmale.

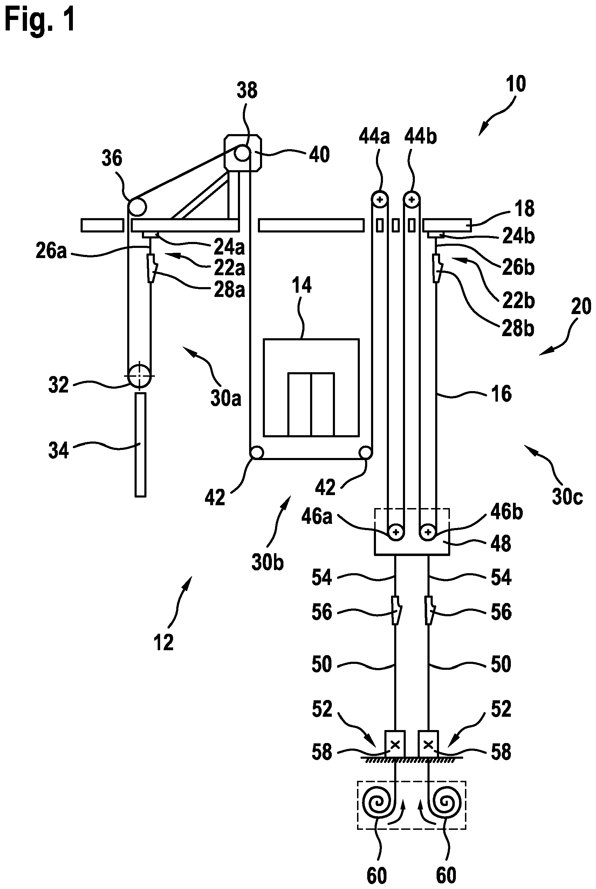

Fig. 1 zeigt ein Aufzugsystem 10, das in einem Aufzugschacht 12 angeordnet ist und das eine Aufzugkabine 14 umfasst, die in dem Aufzugschacht vertikal beweglich aufgehängt ist. Beispielsweise kann die Aufzugkabine 14 an seitlichen Führungsschienen im Aufzugschacht 12 geführt sein.

Die Aufzugkabine 14 wird von einem Traktionsmedium 16 angehoben und abgesenkt, das beispielsweise ein Traktionsseil und/oder einen Traktionsriemen umfassen kann.

Weiter umfasst das Aufzugsystem 10 eine Hebeplattform 18, mit der die Fahrhöhe der Aufzugkabine 14 während einer Einbauphase des Aufzugsystems 10 erhöht werden kann. Beispielsweise kann ein unterer Abschnitt der Führungsschienen des Aufzugsystems 10 in dem Aufzugschacht 12 zusammen mit der Aufzugkabine 14 installiert werden und dann die Hebeplattform 18 am oberen Ende des bereits fertiggestellten Abschnitts des Aufzugschachts 12 (wie etwa die unteren zwei Stockwerke eines Gebäudes) befestigt (d.h. fixiert) werden. Anschließend kann das Traktionsmedium 16 installiert werden. Die Aufzugkabine 14 kann dann bereits zum Transport von Personen und/oder Gegenständen in dem fertiggestellten Abschnitt des Aufzugschachts 12 verwendet werden.

Wenn ein weiterer Abschnitt des Aufzugschachts 12 fertiggestellt ist, kann die (zuvor vom Aufzugschacht abmontierte) Hebeplattform 18 (beispielsweise mit einem Kran) zum oberen Ende des Aufzugschachts 12 angehoben werden und wieder dort fixiert werden. Auf diese Weise kann die Aufzugkabine 14 nun wieder den gesamten fertiggestellten Aufzugschacht 12 befahren.

Durch Wiederholen dieses Vorgangs kann das Aufzugsystem 10 so mit dem wachsenden Gebäude mitwachsen.

Um der Aufzugkabine 12 mehr Traktionsmedium 16 zur Verfügung zu stellen, nachdem die Hebeplattform 18 angehoben wurde, umfasst das Aufzugsystem ein Reservoir 20 für das Traktionsmedium 16, mit dem das für die Aufzugkabine zur Verfügung stehende Traktionsmedium 16 verlängert werden kann, wenn die Hebeplattform 18 angehoben wird. Dabei muss das Traktionsmedium 16 zwischen seinen Enden 22a, 22b nicht geklemmt oder anderweitig fixiert werden.

Das Traktionsmedium 16 ist mit einem ersten Ende 22a an der Hebeplattform 18 fixiert. Beispielsweise ist an der Hebeplattform 18 ein Fixierpunkt 24a vorgesehen, der einen kurzen Seil- oder Riemenabschnitt 26a bereitstellt, an dem das Ende 22a mit einem Endverbinder 28a fixiert werden kann.

Genauso ist das Traktionsmedium 16 mit einem zweiten Ende 22b an der Hebeplattform 18 fixiert. Auch hier kann an der Hebeplattform 18 ein Fixierpunkt 24b vorgesehen sein, der einen kurzen Seil- oder Riemenabschnitt 26b bereitstellt, an dem das Ende 22b mit einem weiteren Endverbinder 28b fixiert werden kann.

Das Traktionsmedium 16 ist nur mit seinen Enden 22a, 22b mit Endverbindern 28a, 28b fixiert. Ansonsten umläuft es lediglich Rollen und/oder Umlenkachsen.

Ausgehend von dem Ende 22a läuft das Traktionsmedium 16 in einem Abschnitt 30a nach unten und wird von einer Rolle 32 eines Gegengewichts 34 wieder nach oben abgelenkt, bis es (nach Umlaufen einer oder mehrerer weiterer Rollen 36) auf eine Rolle 38 eines Antriebs 40 trifft.

Von dem Antrieb 40 läuft das Traktionsmedium 16 in einem weiteren Abschnitt 30b nach unten, wo es von einer oder mehreren Rollen 42, die an der Aufzugkabine 14 fixiert sind, umgelenkt wird und wieder nach oben verläuft, bis es zu einer ersten Umlenkachse 44a des Reservoirs 20 wieder nach unten umgelenkt wird.

Solange die Länge des Traktionsmediums 16 in dem Reservoir 20 nicht verändert wird, was im normalen Aufzugbetrieb in der Regel der Fall ist, ändern beim Heben und Senken der Aufzugkabine 14 nur die Abschnitte 30a und 30b ihre Länge. Beispielsweise wird zum Heben der Aufzugkabine 14 der Abschnitt 30b durch den Antrieb 40 verkürzt und der Abschnitt 30a verlängert, so dass das Gegengewicht 34 abgesenkt wird. Dies geschieht durch Transport des Traktionsmediums 16 aus dem Abschnitt 30b in den Abschnitt 30a durch die Rolle 38 des Antriebs 40. Umgekehrt wird beim Absenken der Aufzugkabine 14 das Traktionsmedium 16 aus dem Abschnitt 30a in den Abschnitt 30b transportiert, wodurch der Abschnitt 30a kürzer und der Abschnitt 30b länger wird. Das Gegengewicht 34 wird in diesem Fall angehoben.

In dem Reservoir 20 ist ein Abschnitt 30c des Traktionsmediums 16 aufgenommen, das um eine Mehrzahl von ersten Umlenkachsen 44a, 44b und eine Mehrzahl von zweiten Umlenkachsen 46a, 46b geführt ist. Die Umlenkachsen 44a, 44b, 46a, 46b können Rollen umfassen, auf denen das Traktionsmedium 16 ohne (oder mit nur geringer) Reibung laufen kann. Auch können alle oder zumindest ein Teil der Umlenkachsen fixe bzw. unbewegliche Laufflächen aufweisen, auf denen das Traktionsmedium 16 (mit höherer Reibung) gleiten kann.

Die ersten, weiter oben angeordneten Umlenkachsen 44a, 44b des Reservoirs 20 sind an der Hebeplattform 18 fixiert. Beispielsweise können die Umlenkachsen 44a, 44b oberhalb der Hebeplattform 18 installiert sein und das Traktionsmedium 16 durch Öffnungen in der Hebeplattform 18 nach unten geführt sein.

Die zweiten, weiter unten angeordneten Umlenkachsen 46a, 46b sind an einer Fixiereinheit 48 fixiert.

Das Traktionsmedium 16 läuft im Reservoir 20 bzw. im Abschnitt 30c ausgehend von seinem Ende 22b, an dem es an der Hebeplattform 18 fixiert ist, abwechselnd nach unten und oben, wobei es der Reihe nach von jeweils einer zweiten Umlenkachse 46a, 46b und einer ersten Umlenkachse 44a, 44b wieder in die Gegenrichtung umgelenkt wird. Damit ist die Länge des Traktionsmediums 16 im Reservoir 20 bzw. die Länge des Abschnitts 30c etwa das 2N-fache des Abstands der ersten Umlenkachsen 44a, 44b von den zweiten Umlenkachsen 46a, 46b, wobei N die Anzahl der ersten Umlenkachsen 44a, 44b bzw. der zweiten Umlenkachsen 46a, 46b ist.

In der Fig. 1 sind jeweils 2 Umlenkachsen 44a, 44b bzw. 46a, 46b gezeigt, so dass im Reservoir 20 etwa das 4-fache des Abstands der Umlenkachsen 44a, 44b bzw. 46a, 46b aufgenommen werden kann. Wird das Aufzugsystem 10 anfangs mit maximalem Abstand der ersten und zweiten Umlenkachsen 44a, 44b bzw. 46a, 46b installiert, d.h. der maximale Abstand ist in etwa die anfängliche Fahrhöhe der Aufzugkabine 12, so kann die Fahrhöhe durch Leeren des Reservoirs 20 auf etwa das 4- bis 5-fache erhöht werden, ohne dass das Traktionsmedium 16 verlängert werden muss.

Die Fixiereinheit 48 ist über ein, zwei oder mehr Einstellseile 50 mit einem oder mehreren Fixierpunkten 52 am unteren Ende des Fahrstuhlschachts 12 verbunden. Beispielsweise kann die Fixiereinheit 48 jeweils ein kurzes Seilende 54 bereitstellen, an dem das jeweilige Einstellseil 50 mittels einer Klemme 56 fixiert werden kann. An einem Fixierpunkt 52 kann das betreffende Einstellseil 50 mit einer weiteren Klemme 58 fixiert werden.

Im normalen Aufzugbetrieb sind die Klemme(n) 58 geschlossen und das oder die Einstellseile 50 halten die Fixiereinheit 48 an einer bestimmten Position im Aufzugschacht 12. Wenn die Hebeplattform 18 angehoben werden soll, kann beispielsweise die Aufzugkabine 14 ans untere Ende des Aufzugschachts 12 gefahren und dort abgestellt werden. Anschließend können die eine oder mehrere Klemmen 58 gelöst werden, so dass das Einstellseil 50 bezüglich des Fixierpunkts 52 beweglich ist und verlängert werden kann.

Beim Anheben der Hebeplattform 18 wird auf diese Weise der Abschnitt 30b des Traktionsmediums 16, der um die Aufzugkabine 14 verläuft, verlängert und somit der Abschnitt 30c im Reservoir 20 verkürzt, was dazu führt, dass die Fixiereinheit 48 nach oben gezogen wird. Auf diese Weise gibt das Reservoir Traktionsmedium 16 frei.

Gleichzeitig verlängern sich das oder die Einstellseile 50, die beispielsweise von einer Seiltrommel 60 abgespult werden können.

Wenn die Hebeplattform wieder am Aufzugschacht 12 fixiert wurde, können auch das oder die Einstellseile 50 wieder an den Fixierpunkten 52 fixiert werden.

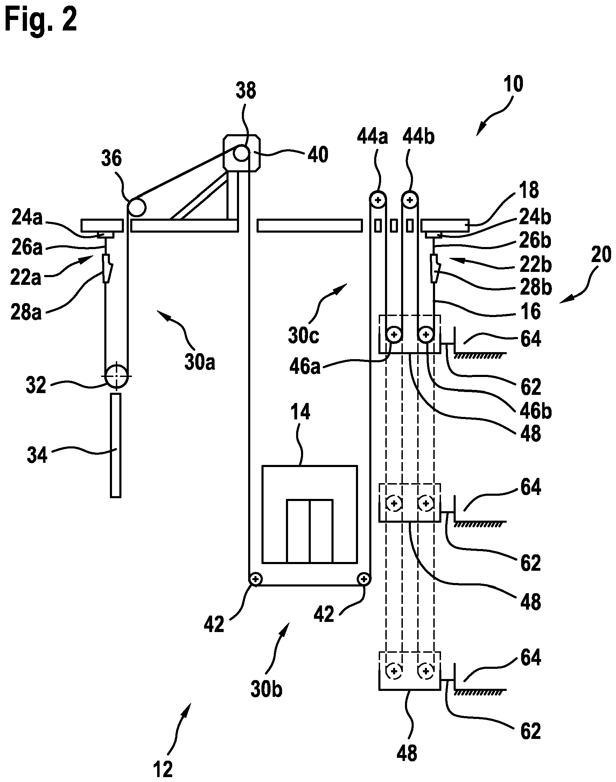

Die Fig. 2 zeigt eine nicht erfindungsgemäße Ausführungsform eines Aufzugsystems 12, das im Wesentlichen bis auf die Fixierung der Fixiereinheit 48 im Aufzugschacht 12 wie das Aufzugsystem 10 aus der Fig. 1 aufgebaut ist.

Bei der Fig. 2 wird die Fixiereinheit 48 direkt im Aufzugschacht 12 fixiert. Während des normalen Aufzugbetriebs ist die Fixiereinheit 48 beispielsweise mit einem Befestigungsmittel 62, wie etwa Schrauben, direkt an einer Wand 64 des Aufzugschachts befestigt.

Vor dem Anheben der Hebeplattform 18 kann, wie bereits oben beschrieben, die Aufzugkabine 14 bis zum Boden des Aufzugschachts 12 abgesenkt werden und/oder die Fixiereinheit 48 vom Aufzugschacht 12 gelöst werden. Beispielsweise kann sie in diesem Fall nur durch die Schwerkraft nach unten gezogen werden (während dies bei der Fig.1 beispielsweise zusätzlich durch eine Feder in der Seiltrommel 60 erfolgen kann).

Wie oben beschrieben wird durch Anheben der Hebeplattform 18 der Abschnitt 30c in dem Reservoir 20 verkürzt und die Fixiereinheit 48 nach oben gezogen. Wenn die Hebeplattform 18 an ihrer neuen Position im Aufzugschacht 12 fixiert wird, kann auch die Fixiereinheit 48 wieder im Aufzugschacht an einer neuen Position fixiert werden. Auf diese Weise kann die Fixiereinheit 48 schrittweise nach oben verlagert werden.

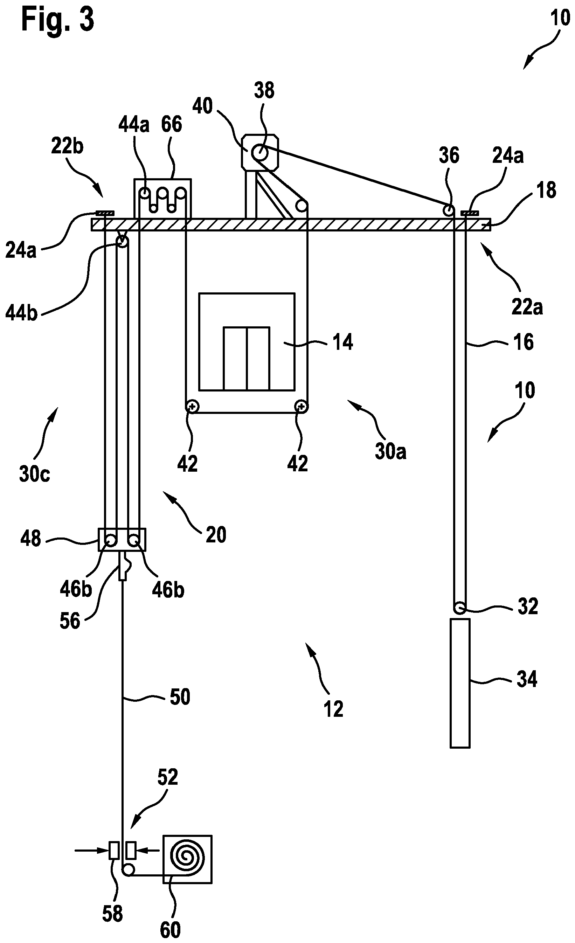

Die Fig. 3 zeigt ein Aufzugsystem 10 mit einer Fixiereinheit 48 analog der Fig. 1. Bei der Fig. 3 ist die erste Umlenkachse 44a, bei der das Traktionsmedium 16 in das Reservoir 20 eintritt, durch eine Rollenanordnung 66 ersetzt. Diese Rollenanordnung 66 kann auch bei dem Aufzugsystem 10 der Fig. 2 eingesetzt werden. Weiter zeigt die Fig.3, dass die eine oder mehrere weiteren ersten Umlenkachsen bzw. Umlenkrollen 44b unterhalb der Hebeplattform 18 angebracht sein können.

Die Rollenanordnung 66 dient dazu, die Kräfte, die auf die Hebeplattform 18, wirken zu minimieren.

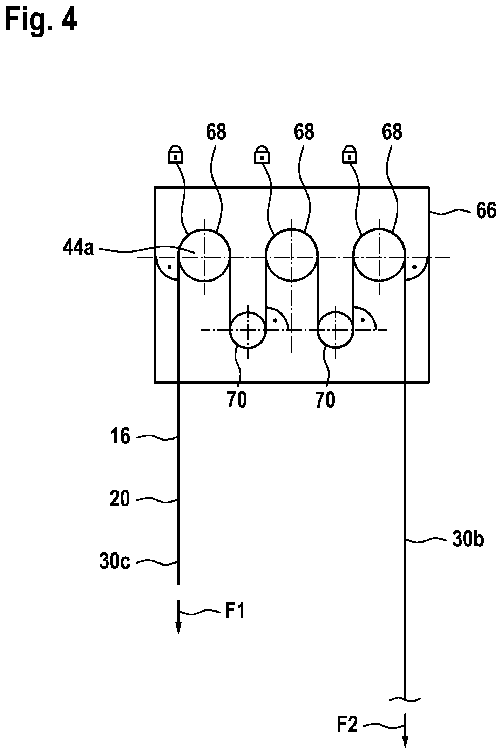

Die Rollenanordnung 66 ist in der Fig. 4 vergrößert dargestellt und umfasst eine Mehrzahl von sperrbaren Umlenkrollen 68 und weiteren Umlenkrollen 70, über die das Traktionsmedium abwechselnd geführt ist. Von dem Abschnitt 30b zum Heben der Aufzugkabine 14 wird das Traktionsmedium 16 um eine erste Umlenkrolle 68 geführt, dann anschließend um eine weitere Umlenkrolle 70 geführt, usw., bis es bei einer letzten sperrbaren Umlenkrolle 68 die Rollenanordnung 66 verlässt und in den Abschnitt 40c im Reservoir 20 übergeht. Die letzte sperrbare Umlenkrolle 68 kann als eine erste Umlenkachse 44a des Reservoirs aufgefasst werden.

Während des normalen Aufzugbetriebs sind die sperrbaren Umlenkrollen 68 gesperrt. Wenn die Hebeplattform 18 angehoben wird, werden die sperrbaren Umlenkrollen 68 entsperrt, so dass das im Reservoir 20 befindliche Traktionsmedium 16 verkürzt werden kann. Dies kann dadurch geschehen, dass, wie oben beschrieben, die Fixiereinheit 48 in Richtung der Hebeplattform 18 verschoben wird.

Wenn die Umlenkrollen 68 gesperrt sind, reduziert die Rollenanordnung 66 die Kraft F1, die vom Traktionsmedium 16 auf den Abschnitt 30c im Reservoir 16 ausgeübt wird:

$$F2 <= F1\ e^{\mu\alpha}$$

wobei F2 die Kraft ist, die vom Abschnitt 30b mit der Aufzugkabine 14, $\mu$ der Haftreibungskoeffizient der sperrbaren Umlenkrollen 68 und $\alpha$ die Kontaktwinkellänge ist. Wenn beispielsweise die Kraft F2 20 kN beträgt, $\mu = 0.35$ und $\alpha = 540°$ ist (bei drei Umlenkrollen 68 jeweils 180° Kontaktwinkellänge), ist die Kraft F1 um den Faktor 27 geringer.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Der Schutzumfang der Erfindung wird durch die beigefügten Ansprüche bestimmt. Bezugszeichen in den Ansprüchen sind nicht als Einschränkung anzusehen.

**Patentansprüche**

1. Aufzugsystem (10), umfassend:

   eine Aufzugkabine (14), die in einem Aufzugschacht (12) vertikal beweglich angeordnet ist;

ein Traktionsmedium (16) zum Heben und Senken der Aufzugkabine (14), wobei das Traktionsmedium (16) um wenigstens eine an der Aufzugkabine (14) fixierten Rolle (42) geführt ist und das Traktionsmedium (16) lediglich an Enden (22a, 22b) fixiert ist;

ein Reservoir (20) für das Traktionsmedium (16), wobei das Reservoir (20) wenigstens eine erste Umlenkachse (44a, 44b) und wenigstens eine zweite Umlenkachse (46a, 46b) umfasst, um die das Traktionsmedium (16) abwechselnd zwischen einer ersten Umlenkachse (44a, 44b) und einer zweiten Umlenkachse (46a, 46b) geführt ist, so dass ein Abschnitt (30c) des Traktionsmediums (16), dessen Länge von einem Abstand der wenigstens einen ersten Umlenkachse (44a, 44b) und der wenigstens einen zweiten Umlenkachse (46a, 46b) abhängt, in dem Reservoir (20) aufgenommen ist;

eine Fixiereinheit (48), an der die wenigstens eine zweite Umlenkachse (46a, 46b) fixiert ist, wobei die Fixiereinheit (48) an verschiedenen Positionen im Aufzugschacht (12) befestigbar ist, so dass ein Abstand zwischen der wenigstens einen ersten Umlenkachse (44a, 44b) und der wenigstens einen zweiten Umlenkachse (46a, 46b) einstellbar ist, um die in dem Reservoir (20) aufgenommene Länge des Traktionsmediums (16) festzulegen,

**dadurch gekennzeichnet, dass** die Fixiereinheit (48) über wenigstens ein Einstellseil (50) mit einem Fixierpunkt (52) verbunden ist und zum Verlängern und/oder Verkürzen des Abstands der wenigstens einen ersten Umlenkachse (44a, 44b) und der wenigstens einen zweiten Umlenkachse (46a, 46b) das Einstellseil (50) zwischen der Fixiereinheit (48) und dem Fixierpunkt (52) verlängerbar und/oder verkürzbar ist.

2. Aufzugsystem (10) nach Anspruch 1,
wobei das Einstellteil bei dem Fixierpunkt (52) mit einer Klemme (58) an dem Aufzugschacht (12) fixiert ist.

3. Aufzugsystem (10) nach Anspruch 1 oder 2,
wobei bei dem Fixierpunkt (52) eine Seiltrommel (60) zum Aufnehmen eines Endabschnitts des Einstellseils (50) vorgesehen ist.

4. Aufzugsystem (10) nach einem der vorhergehenden Ansprüche,
wobei die Fixiereinheit (48) an mehreren Positionen an einer Wand (64) des Aufzugschachts (12) fixierbar ist und zum Verlängern und/oder Verkürzen des Abstands der wenigstens einen ersten Umlenkachse (44a, 44b) und der wenigstens einen zweiten Umlenkachse (46a, 46b) an einer anderen Position an der Wand (64) fixiert wird.

5. Aufzugsystem (10) nach einem der vorhergehenden Ansprüche,
wobei das Reservoir (20) wenigstens zwei erste Umlenkachsen (44a, 44b) und wenigstens zwei zweite Umlenkachsen (46a, 46b) umfasst; und/oder
wobei die wenigstens eine erste Umlenkachse (44a, 44b) eine Umlenkrolle und/oder die wenigstens zweite Umlenkachse (46a, 46b) eine Umlenkrolle ist.

6. Aufzugsystem (10) nach einem der vorhergehenden Ansprüche,
wobei das Reservoir (20) eine Rollenanordnung (66) zum Reduzieren einer auf das Traktionsmedium (16) im Reservoir (20) wirkenden Kraft umfasst, die zwischen dem Abschnitt (30c) des Traktionsmediums (16) im Reservoir (20) und einem mit der Aufzugkabine (14) verbundenen Abschnitt (30b) des Traktionsmediums (16) angeordnet ist; und/oder
wobei eine Rollenanordnung (66) zum Reduzieren einer auf das Traktionsmedium (16) im Reservoir (20) wirkenden Kraft eine Mehrzahl von sperrbaren Umlenkrollen (68) umfasst.

7. Aufzugsystem (10) nach einem der vorhergehenden Ansprüche,
wobei bei einer Bewegung der Aufzugkabine (14) in dem Aufzugschacht (12) die Länge des Abschnitts (30c) des Traktionsmediums (16), der in dem Reservoir (20) aufgenommen ist, unverändert bleibt.

8. Aufzugsystem (10) nach einem der vorhergehenden Ansprüche,
wobei bei einer Bewegung der Aufzugkabine (14) in dem Aufzugschacht (12) ein zweiter Abschnitt (30a) des Traktionsmediums (16), der um eine an einem Gegengewicht (34) für die Aufzugkabine (14) fixierten Umlenkrolle (32) geführt ist, verkürzt bzw. verlängert wird, und ein dritter Abschnitt (30b) des Traktionsmediums (16), der um die an der Aufzugkabine (14) fixierten Umlenkrolle (42) läuft, entsprechend verlängert bzw. verkürzt wird; und/oder
wobei der zweite Abschnitt (30a) und der dritte Abschnitt (30b) durch einen dazwischen angeordneten Antrieb (40) verkürzbar bzw. verlängerbar sind.

9. Aufzugsystem (10) nach einem der vorhergehenden Ansprüche, weiter umfassend:
eine Hebeplattform (18) zum Befestigen in unterschiedlicher Höhe über einem Boden des Aufzugschachts (12), um eine vertikale Fahrhöhe der Aufzugkabine (14) zu verlängern.

10. Aufzugsystem (10) nach Anspruch 9,
wobei die wenigstens eine erste Umlenkachse (44a, 44b) des Reservoirs (20) an der Hebeplattform (18) fixiert ist; und/oder

wobei eine Rollenanordnung (66) zum Reduzieren einer auf das Traktionsmedium (16) im Reservoir wirkenden Kraft an der Hebeplattform (18) fixiert ist.

11. Aufzugsystem (10) nach Anspruch 9 oder 10, wobei das Traktionsmedium (16) mit beiden Enden (22a, 22b) an der Hebeplattform (18) fixiert ist; und/oder wobei ein Antrieb (40) für das Aufzugsystem (10) an der Hebeplattform (18) fixiert ist.

12. Aufzugsystem (10) nach einem der vorhergehenden Ansprüche, wobei das Traktionsmedium (16) ein Stahlseil umfasst; und/oder wobei das Traktionsmedium (16) einen Riemen aus mit Kunststoff ummantelten Stahldrähten umfasst.

13. Verfahren zum Einstellen einer Länge eines Abschnitts eines Traktionsmediums (16) in einem Reservoir (20) mit einem Aufzugsystem (10) nach einem der vorhergehenden Ansprüche, das Verfahren umfassend:

Lösen einer Befestigung (58, 62) der Fixiereinheit (48), die sich an einer ersten Position im Aufzugschacht (12) befindet, so dass die Fixiereinheit (48) im Aufzugschacht (12) beweglich ist;
Bewegen der Fixiereinheit (48) zu einer zweiten Position durch Verkürzen bzw. Verlängern mindestens eines Einstellseils (50), über das die Fixiereinheit (48) mit einem Fixierpunkt (52) verbunden ist, so dass der Abstand der wenigstens einen ersten Umlenkachse (44a, 44b) und der wenigstens einen zweiten Umlenkachse (46a, 46b) und somit die Länge eines Abschnitts (30c) des Traktionsmediums (16) in dem Reservoir (20) verkürzt bzw. verlängert wird, so dass ein verbleibender Abschnitt (30a, 30b) des Traktionsmediums (16), der zum Heben der Aufzugkabine (16) zur Verfügung steht, entsprechend verlängert bzw. verkürzt wird;
Befestigen der Fixiereinheit (48) bei der zweiten Position.

## Claims

1. Lift system (10), comprising:

a lift cage (14) arranged to be vertically movable in a lift shaft (12);
a traction medium (16) for raising and lowering the lift cage (14), wherein the traction medium (16) is guided around at least one roller (42) fixed to the lift cage (14) and the traction medium (16) is fixed merely at ends (22a, 22b);

a reservoir (20) for the traction medium (16), wherein the reservoir (20) comprises at least one first deflecting axle (44a, 44b) and at least one second deflecting axle (46a, 46b) about which the traction medium (16) is guided in alternation between a first deflecting axle (44a, 44b) and a second deflecting axle (46a, 46b) so that a section (30c) of the traction medium (16) is received in the reservoir (20), the length of the section depending on the spacing of the at least one first deflecting axle (44a, 44b) and the at least one second deflecting axle (46a, 46b); and
a fixing unit (48) to which the at least one second deflecting axle (46a, 46b) is fixed, wherein the fixing unit (48) is fastenable in the lift shaft (12) at different positions so that the spacing between the at least one first deflecting axle (44a, 44b) and the at least one second deflecting axle (46a, 46b) is settable so as to determine the length of the traction medium (16) received in the reservoir (20), **characterised in that** the fixing unit (48) is connected with a fixing point (52) by way of at least one setting cable (50) and the setting cable (50) is lengthenable and/or shortenable between the fixing unit (48) and the fixing point (52) for lengthening and/or shortening the spacing of the at least one first deflecting axle (44a, 44b) and the at least one second deflecting axle (46a, 46b).

2. Lift system (10) according to claim 1, wherein the setting cable is fixed at the fixing point (52) by a clamp (58) at the lift shaft (12).

3. Lift system (10) according to claim 1 or 2, wherein a cable drum (60) for receiving an end section of the setting cable (50) is provided at the fixing point (52).

4. Lift system (10) according to any one of the preceding claims, wherein the fixing unit (48) is fixable at several positions at a wall (64) of the lift shaft (12) and is fixed at a different position at the wall (64) for lengthening and/or shortening the spacing of the at least one first deflecting axle (44a, 44b) and the at least one second deflecting axle (46a, 46b).

5. Lift system (10) according to any one of the preceding claims, wherein the reservoir (20) comprises at least two first deflecting axles (44a, 44b) and at least two second deflecting axles (46a, 46b) and/or wherein the at least one first deflecting axle (44a, 44b) is a deflecting roller and/or the at least one second deflecting axle (46a, 46b) is a deflecting roller.

6. Lift system (10) according to any one of the preceding claims, wherein the reservoir (20) comprises a roller arrangement (66) for reducing a force acting on the traction medium (16) in the reservoir (20), the roller arrangement being arranged between the section (30c) of the traction medium (16) in the reservoir (20) and a section (30b) of the traction medium (16) connected with the lift cage (14), and/or wherein a roller arrangement (66) comprises a plurality of lockable deflecting rollers (68) for reducing a force acting on the traction medium (16) in the reservoir (20).

7. Lift system (10) according to any one of the preceding claims, wherein the length of the section (30c) of the traction medium (16) received in the reservoir (20) remains unchanged when movement of the lift cage (14) in the lift shaft (12) takes place.

8. Lift system (10) according to any one of the preceding claims, wherein a second section (30a) of the traction medium (16) guided around a deflecting roller (32) fixed to a counterweight (34) for the lift cage (14) is shortened or lengthened when movement of the lift cage (14) in the lift shaft (12) takes place and a third section (30b) of the traction medium (16) running around the deflecting roller (42) fixed to the lift cage (14) is correspondingly lengthened or shortened and/or wherein the second section (30a) and the third section (30b) are shortenable or lengthenable by a drive (40) arranged therebetween.

9. Lift system (10) according to any one of the preceding claims, further comprising a lifting platform (18) for fastening at different heights above a floor of the lift shaft (12) so as to lengthen a vertical travel height of the lift cage (14).

10. Lift system (10) according to claim 9, wherein the at least one first deflecting axle (44a, 44b) of the reservoir (20) is fixed to the lifting platform (18) and/or wherein a roller arrangement (66) for reducing a force acting on the traction medium (16) in the reservoir is fixed to the lifting platform (18).

11. Lift system (10) according to claim 9 or 10, wherein the traction medium (16) is fixed at both ends (22a, 22b) to the lifting platform (18) and/or wherein a drive (40) for the lift system (10) is fixed to the lifting platform (18).

12. Lift system (10) according to any one of the preceding claims, wherein the traction medium (16) comprises a steel cable and/or wherein the traction medium (16) comprises a belt consisting of steel wires encased by synthetic material.

13. Method for setting a length of a section of a traction medium (16) in a reservoir (20) with a lift system (10) according to any one of the preceding claims, the method comprising:

releasing a fastening (58, 62) of the fixing unit (48), which is present at a first position in the lift shaft (12), so that the fixing unit (48) is movable in the lift shaft (12);
moving the fixing unit (48) to a second position by shortening or lengthening at least one setting cable (50), by way of which the fixing unit (48) is connected with a fixing point (52), so that the spacing of the at least one first deflecting axle (44a, 44b) and the at least one section deflecting axle (46a, 46b) and thus the length of a section (30c) of the traction medium (16) in the reservoir (20) are shortened or lengthened so that a remaining section (30a, 30b) of the traction medium (16) available for lifting the lift cage (16) is correspondingly lengthened or shortened; and fastening the fixing unit (48) at the second position.

**Revendications**

1. Système d'ascenseur (10) comprenant :

une cabine d'ascenseur (14) qui est disposée de manière mobile verticalement dans une cage d'ascenseur (12) ;
un moyen de traction (16) destiné à lever et à abaisser la cabine d'ascenseur (14), le moyen de traction (16) étant guidé autour d'au moins une poulie (42) fixée à la cabine d'ascenseur (14) et le moyen de traction (16) étant fixé uniquement aux extrémités (22a, 22b) ;
un réservoir (20) pour le moyen de traction (16), le réservoir (20) comprenant au moins un premier axe de déviation (44a, 44b) et au moins un second axe de déviation (46a, 46b) autour duquel le moyen de traction (16) est guidé alternativement entre un premier axe de déviation (44a, 44b) et un second axe de déviation (46a, 46b), de sorte qu'une section (30c) du moyen de traction (16), dont la longueur dépend d'une distance entre l'au moins un premier axe de déviation (44a, 44b) et l'au moins un second axe de déviation (46a, 46b), soit reçue dans le réservoir (20) ;
une unité de fixation (48) sur laquelle est fixé l'au moins un second axe de déviation (46a, 46b), l'unité de fixation (48) pouvant être fixée à différentes positions dans la cage d'ascenseur (12), de sorte qu'une distance entre l'au moins un premier axe de déviation (44a, 44b) et l'au moins un second axe de déviation (46a, 46b) soit réglable pour définir la longueur du moyen de traction (16) reçue dans le réservoir (20), **caractérisé en ce que** l'unité de fixation (48) est reliée à un point de fixation (52) par l'intermédiaire d'au moins un câble de réglage (50), et le câble de réglage (50) pouvant être prolongé et/ou raccourci entre l'unité de fixation (48) et le point de fixation (52) afin de prolonger et/ou de réduire la distance entre l'au moins un premier axe de déviation (44a, 44b) et l'au moins un second axe de déviation (46a, 46b).

2. Système d'ascenseur (10) selon la revendication 1, dans lequel le câble de réglage est fixé à la cage d'ascenseur (12) au point de fixation (52) à l'aide d'une pince (58).

3. Système d'ascenseur (10) selon la revendication 1 ou 2,
   dans lequel, au point de fixation (52), un tambour à câble (60) est prévu pour recevoir une partie d'extrémité du câble de réglage (50).

4. Système d'ascenseur (10) selon l'une des revendications précédentes,
   dans lequel l'unité de fixation (48) peut être fixée à une paroi (64) de la cage d'ascenseur (12) à plusieurs positions, et est fixée à une autre position sur la paroi (64) de façon à prolonger et/ou réduire la distance entre l'au moins un premier axe de déviation (44a, 44b) et l'au moins un second axe de déviation (46a, 46b).

5. Système d'ascenseur (10) selon l'une des revendications précédentes,
   dans lequel le réservoir (20) comprend au moins deux premiers axes de déviation (44a, 44b) et au moins deux seconds axes de déviation (46a, 46b) ; et/ou
   dans lequel l'au moins un premier axe de déviation (44a, 44b) est une poulie de renvoi et/ou l'au moins un second axe de déviation (46a, 46b) est une poulie de renvoi.

6. Système d'ascenseur (10) selon l'une des revendications précédentes,
   dans lequel le réservoir (20) comprend un agencement de poulies (66) destiné à réduire une force agissant sur le moyen de traction (16) dans le réservoir (20), l'agencement de poulies étant disposé entre la section (30c) du moyen de traction (16) dans le réservoir (20) et une section (30b) du moyen de traction (16) reliée à la cabine d'ascenseur (14) ; et/ou
   dans lequel un agencement de poulies (66) destiné à réduire une force agissant sur le moyen de traction (16) dans le réservoir (20) comprend une pluralité de poulies de renvoi (68) verrouillables.

7. Système d'ascenseur (10) selon l'une des revendications précédentes,
   dans lequel, lors du déplacement de la cabine d'ascenseur (14) dans la cage d'ascenseur (12), la longueur de la section (30c) du moyen de traction (16) reçue dans le réservoir (20) reste inchangée.

8. Système d'ascenseur (10) selon l'une des revendications précédentes,
   dans lequel, lors d'un déplacement de la cabine d'ascenseur (14) dans la cage d'ascenseur (12), une deuxième section (30a) du moyen de traction (16) guidée autour d'une poulie de renvoi (32) fixée à un contrepoids (34) pour la cabine d'ascenseur (14) est raccourcie ou étendue, et une troisième section (30b) du moyen de traction (16), qui tourne autour de la poulie de renvoi (42) fixée à la cabine d'ascenseur (14) est prolongée ou raccourcie en conséquence ; et/ou
   la deuxième section (30a) et la troisième section (30b) pouvant chacune être raccourcie et prolongée par un entraînement (40) disposé entre elles.

9. Système d'ascenseur (10) selon l'une des revendications précédentes, comprenant en outre :
   une plate-forme de levage (18) destinée à être montée à différentes hauteurs au-dessus d'un plancher de la cage d'ascenseur (12) pour prolonger une hauteur de déplacement verticale de la cabine d'ascenseur (14).

10. Système d'ascenseur (10) selon la revendication 9, dans lequel l'au moins un premier axe de déviation (44a, 44b) du réservoir (20) est fixé à la plate-forme de levage (18) ; et/ou
    dans lequel un agencement de poulies (66) destiné à réduire une force agissant sur le moyen de traction (16) dans le réservoir est fixé à la plate-forme de levage (18).

11. Système d'ascenseur (10) selon la revendication 9 ou 10,
    dans lequel le moyen de traction (16) est fixé aux deux extrémités (22a, 22b) à la plate-forme de levage (18) ; et/ou
    dans lequel un entraînement (40) du système d'ascenseur (10) est fixé à la plate-forme de levage (18).

12. Système d'ascenseur (10) selon l'une des revendications précédentes,
    dans lequel le moyen de traction (16) comprend un câble en acier ; et/ou
    dans lequel le moyen de traction (16) comprend une courroie de fils d'acier revêtus de matière plastique.

13. Procédé de réglage de la longueur d'une section d'un moyen de traction (16) dans un réservoir (20), d'un système d'ascenseur (10) selon l'une des revendications précédentes, le procédé consistant à :

    libérer une fixation (58, 62) de l'unité de fixation (48) se trouvant à une première position dans la cage d'ascenseur (12), de sorte que l'unité de fixation (48) soit mobile dans la cage d'ascenseur (12) ;

déplacer l'unité de fixation (48) vers une seconde position par le raccourcissement ou le prolongement d'au moins un câble de réglage (50) par lequel l'unité de fixation (48) est reliée à un point de fixation (52), de sorte que la distance entre l'au moins un premier axe de déviation (44a, 44b) et l'au moins un second axe de déviation (46a, 46b) et donc la longueur d'une section (30c) du moyen de traction (16) dans le réservoir (20) soit raccourcie ou prolongée, de sorte qu'une section restante (30a, 30b) du moyen de traction (16) prévue pour soulever la cabine d'ascenseur (16) soit prolongée en conséquence ;

fixer l'unité de fixation (48) dans la seconde position.

## Fig. 1

# Fig. 2

# Fig. 3

# Fig. 4

68    68    68

66

44a

70    70

16

20

30c

F1

30b

F2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014086639 A1
- JP H06263369 A